(19) Europäisches Patentamt / European Patent Office / Office européen des brevets

(11) **EP 1 696 288 B1**

(12) **EUROPEAN PATENT SPECIFICATION**

(45) Date of publication and mention
of the grant of the patent:
**18.04.2018 Bulletin 2018/16**

(51) Int Cl.:
**G05B 13/04** *(2006.01)*          **G05B 23/02** *(2006.01)*

(21) Application number: **05250825.6**

(22) Date of filing: **12.02.2005**

(54) **Adaptive sensor model**

Adaptives Sensormodell

Modèle de capteur adaptatif

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**30.08.2006 Bulletin 2006/35**

(73) Proprietor: **Ansaldo Energia IP UK Limited
London W1G 9DQ (GB)**

(72) Inventors:
• **Dixon, Roger
Littlethorpe
Leicester LE19 2JZ (GB)**
• **Pike, Andrew W.
Countesthorpe
Leicester LE8 5QT (GB)**

(74) Representative: **Bernotti, Andrea et al
Studio Torta S.p.A.
Via Viotti, 9
10121 Torino (IT)**

(56) References cited:
GB-A- 2 404 999     US-A- 4 639 853
US-A- 5 584 172     US-A1- 2003 172 728

• **WOO W W ET AL: "A DIRECTIONAL FORGETTING FACTOR FOR SINGLE-PARAMETER VARIATIONS" PROCEEDINGS OF THE AMERICAN CONTROL CONFERENCE (ACC). SEATTLE, JUNE 21, vol. VOL. 2, 21 June 1995 (1995-06-21), pages 1149-1151, XP000590445 ISBN: 0-7803-2446-3**

**Description**

FIELD OF THE INVENTION

The invention relates to the field of controlling gas turbine engines.

BACKGROUND OF THE INVENTION

It is often desirable to operate a model of a plant or system in real time to predict the output(s) of that system based on a set of measured inputs. The predicted output(s) can then be used to control the system in order to obtain the desired outputs.

In the case where the model was created and fitted to data off-line, it is usually beneficial to permit the model to be refined based on on-line measurements of the system output, in order for a generic model to be adapted to an individual system or to the particular operating conditions of the system. Adaptive algorithms are known, which can refine a model of a system based on the measured inputs and outputs of the system while on-line. Such algorithms typically use methods based on recursive least squares to refine the model and it is known to tailor the way in which such models are refined using "forget factors" to determine how much effect the new data has on the model, and covariance matrices to incorporate estimated parameter uncertainty information into the adaptive parameter updates.

A significant problem of known real-time adaptive algorithms is that they may over-adapt the model to the current data. The longer the system runs at a steady operating point, the more data about that operating point accumulates and the more closely the model will be tuned to behaviour at that operating point. The consequence of over-adaptation is a model that gives accurate predictions of response around the current operating point but predicts badly when the operating point changes: i.e. the generality of the model is lost.

Document US 5 584 172 A discloses a power generation plant possessing a gas turbine including a nitrogen oxide removal apparatus comprising a feedback control system and a feedforward control system. In the feedforward control system (figure 4), the NOx corrector 25 comprises a predictor 25a for predicting the NOx concentration at the inlet of the nitrogen oxide removal apparatus based upon the state amount signal (b) of the gas turbine unit indicative of combustion conditions, a NOx sensor model 25b inputting the predicted NOx concentration (a signal b1) and representing dynamical characteristics such as the delayed measurement of the NOx sensor 23 and waste time, and a signal generator 25c for generating a corrected NOx concentration signal (c) by adding a difference between an output b2 of the NOx sensor model 25b and an output b1 of the predictor 25a to the output (a) of the NOx sensor 23.

Document US 4 639 853 A discloses discrete-time adaptive on-off switching control of a continuous-time process with a binary switching actuator, which uses for the determination of the on-off actuating signal a prediction of a process output sequence over several future sampling intervals as reaction to a possible process input sequence that is applied to a discrete-time linear process model and which estimates and updates in every sampling interval the parameters of the process model by means of a parameter estimation device in order to adapt them to the process to be controlled. As a part of the adaptive control scheme a standard Recursive Least Squares estimation (RLS-estimation) with forget factor for dynamic model parameter estimation is used.

SUMMARY OF THE INVENTION

The invention provides a method for controlling a gas turbine engine according to claim 1.

The invention thus differs from the prior art in that, when each prediction is made, the method starts with the initial (e.g. off-line) model and then revises the model using only the most recent n sets of on-line data. The model always remains "tethered" to the initial, generic model, while also taking into account recent data. If operating conditions remain steady, the model does not become too specific to those operating conditions. The number n can be chosen for any given system to achieve the desired balance between contributions from the initial model and from on-line measurements.

The physical system is a gas turbine engine. The invention allows an initial model to be developed that is applicable to a whole group of systems, such as an engine fleet, whilst also being capable of adapting itself to be directly applicable to the individual engine on which it is installed.

The invention is applicable to the modelling of almost any physical system but specific examples of the predicted output value y (t) in the context of a turbine engine might be the compressor outlet pressure (units Pa) or the first stage turbine outlet temperature (units deg.K).

Preferably, the times t1 ... tn are the most recent n times preceding time t at which measurements were made, so that the most current data are used to refine the model. However, there may be applications in which it is desirable to use a set of sampling times spread more widely over the lifetime of the system in order to base the revised model on a broader range of experience. In that situation, it is likely that the sampling times will not be evenly spread but clustered more closely in the recent past.

Preferably, the method is applied using the n sets of measurements in chronological order.

In a preferred method according to the invention, adapting the model of the gas turbine engine using the updated window comprises, for each of the n sets of measurements:

applying the model to the on-line measurements of the behavior of the gas turbine engine sampled at time ti to generate a predicted output $\hat{y}(ti)$;
calculating an error by finding the difference between the predicted output $\hat{y}(ti)$ and the synthetic sensor signals sampled at time ti; and using the calculated error to revise a set of parameters of the model.

Using the calculated error to revise a set of parameters of the model comprises using a recursive estimation algorithm to revise the parameters of the model.. This is preferably a Recursive Least Squares (RLS) algorithm but other established recursive parameter estimation methods could be applied, for example Recursive Maximum Likelihood (RML), Recursive Instrumental Variables (RIV) etc.

The model may further include an error covariance matrix P, which is used to revise the parameters of the model; in which case the method further comprises a step of using the the on-line measurements of the behaviour of the gas turbine engine (16) sampled at time ti to revise the error covariance matrix P. It is within this error covariance matrix that the information about all the previous data and the model's fit to that data is encoded.

The invention further provides a gas turbine plant according to claim 9.

BRIEF DESCRIPTION OF THE DRAWINGS

Exemplary embodiments of the invention will now be described, with reference to the accompanying drawings, in which:

Figure 1 diagrammatically illustrates a control system incorporating the invention; and

Figure 2 is a flowchart showing the cycle of steps that is followed each time a prediction is made in accordance with the invention.

DETAILED DESCRIPTION OF THE PREFERRED EMBODIMENTS

Initially a fixed parameter model is fitted off-line to input/output data from an item of plant. The nature of these inputs and outputs will depend on the individual plant. For example, the plant may be a gas turbine engine. One model for a gas turbine engine may predict the compressor outlet pressure as a function of the following measured inputs: generated power, turbine exit pressure, compressor outlet temperature and shaft speed. Another model may predict the first stage turbine outlet
temperature as a function of the following measured inputs: compressor outlet pressure, water injection flow and engine speed. In principle, similar models can be used to predict any variable of interest such as pressure temperature, speed or power, based on other measurements from around the engine; and of course such models are not limited to the field of engines.

After development of the initial, off-line model, the model algorithm is run in software as part of the control system for the plant. At each sample time of the control system, the model uses the measured plant inputs to predict the plant output. In addition, the model is updated at each sample time based on the measured output data received from the plant. That is, it is tuned to be a better representation of the input/output relationship. Hence, it is termed an adaptive sensor model.

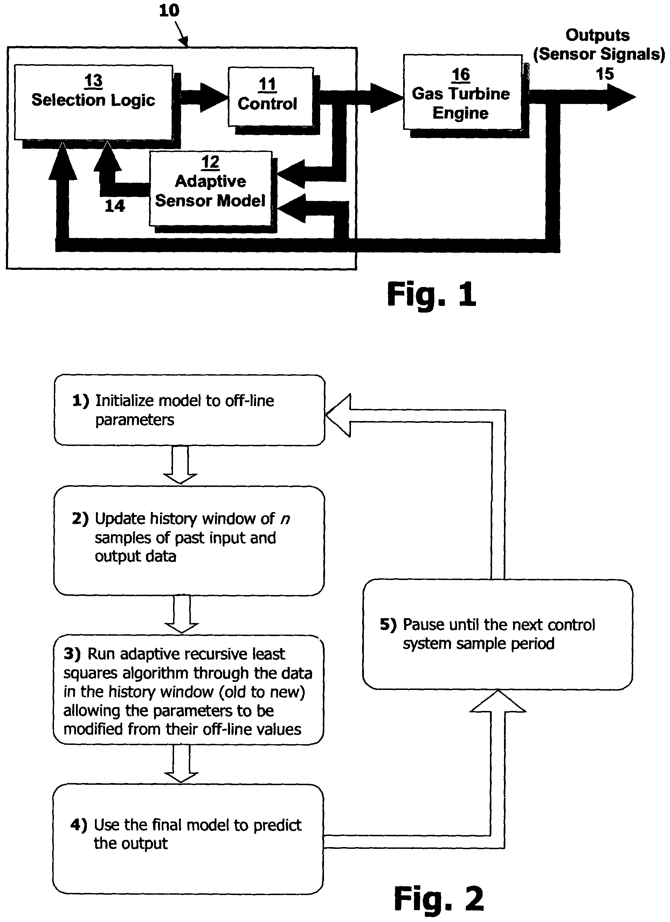

Referring now to Figure 1, a closed loop control system 10 is implemented digitally and comprises a control function 11, an adaptive sensor model 12 and selection logic 13, which selects for input to the control function 11 the output 14 of the model 12 and the on-line output signals 15 of various sensors installed in a gas turbine engine 16. The sensors are installed to enable on-line measurement of plant behaviour and their output signals are periodically sampled by the control system. As described herein, the adaptive sensor model 12 is derived from both off-line and on-line measurements of gas turbine behaviour (these being variables such as pressure, temperature, flow and rotor speed, as measured by the sensors in the gas turbine engine) and provides an additional "synthetic" sensor signal channel for input to the control function 11, if selected by the selection logic 13. The synthetic sensor signal 14 corresponds to a chosen one of the on-line sensor output signals 15. Hence, the adaptive sensor model 12 is an integral part of the overall closed loop control of the gas turbine 16.

It will be understood that more than one adaptive sensor model 12 may be incorporated in the control system 10 if it is desired to produce more than one synthetic sensor signal to predict the behaviour of more than one output of the gas turbine engine 16. For example, as previously stated, there may be one model for predicting compressor outlet pressure and another model for predicting first stsge turbine outlet tempertature.

The selection logic 13 implements a further algorithm that compares the outputs 15 of the sensors on the gas turbine and the output(s) 14 of the adaptive sensor model(s) with a weighted average of their values, the object being to select the signal(s) for input to the control function 11 that are most likely to accurately represent true values. This type of algorithm is well-known in the control system art and is used here to screen out signals from the control loop which may result from faulty sensors.

The benefits arising from incorporation of the adaptive sensor model(s) 12 in the control system 10 include:

- improved ability to detect sensor faults; and
- improved ability to accommodate faults, because it allows continued controlled operation even after failure or signal biasing malfunction of one or more sensors in the gas turbine engine control loop. E.g. (1), the invention could enable the gas turbine engine to continue to operate normally at either full or part load, in response to the demands of the control function 11, but with the biased or faulty sensor signal(s) screened out. E.g. (2), alternatively, if the number and severity of the sensor faults exceeded predetermined critical limits, the invention could enable the gas turbine engine to be closed down in a controlled manner rather than it being subjected to an emergency shutdown.

Figure 2 gives an overview of the method implemented by the algorithm comprising the (or each) adaptive sensor model 12 and shows a cycle of steps that is followed once for each sample interval of the control system. In Step 1, the model is reinitialized to the off-line model. In particular, the model parameters and an error covariance matrix are initialized to the values obtained from the off-line fitting. It is important to note that this is done at every sample interval, whereby the adapted model always remains tethered to the initial model and the on-line data do not accumulate disproportionately.

Next, in Step 2, a window of n previous samples of input/output data is updated by adding the most recent set of values and deleting the oldest set of values.

In Step 3, the model adaptation takes place, using the recursive least squares (RLS) method. Alternatively, other established recursive parameter estimation methods could be applied, for example Recursive Maximum Likelihood (RML), Recursive Instrumental Variables (RIV) etc. The recursion begins with the oldest set of sampled input values and sweeps through the n samples in the window of historical data in sequence from old to new, updating the model parameters and the error covariance matrix each time to refine the model.

After *n* recursions of the adaptive algorithm, the final parameters of the adapted model are used in Step 4 to predict the current output based on the measured current inputs.

Step 5 represents a pause until the next sample interval, when the model is reinitialized and the cycle begins again from Step 1.

These steps are described in more detail below in relation to the particular model implementing the RLS parameter estimation method.

### *Modest Structure*

The structure of one particular model used for gas turbine engine sensor to sensor modelling is of the form:

$$
\begin{aligned}
\hat{y}(t) = \; & \hat{b}_0(t) \\
& + \hat{b}_{11}(t)r_1(t) + \hat{b}_{21}(t)r_2(t) + \ldots + \hat{b}_{NR1}(t)r_{NR}(t) \\
& + \hat{b}_{12}(t)r_1^2(t) + \hat{b}_{22}(t)r_2^2(t) + \ldots + \hat{b}_{NR2}(t)r_{NR}^2(t) \\
& + \hat{b}_{13}(t)r_1^3(t) + \hat{b}_{23}(t)r_2^3(t) + \ldots + \hat{b}_{NR3}(t)r_{NR}^3(t)
\end{aligned} \tag{1}
$$

Some of the coefficients $\hat{b}_{xx}(t)$ in (1) may be set to zero according to the module parameter *'order'*, discussed below. However, every model contains the term $\hat{b}_0(t)$.

Equation (1) can be written as follows:

$$\hat{y}(t) = \begin{bmatrix} \hat{b}_0(t) & \hat{b}_{11}(t) & \dots & \hat{b}_{NR3}(t) \end{bmatrix} * \begin{bmatrix} 1 \\ r_1(t) \\ \vdots \\ r_{NR}^3(t) \end{bmatrix} = \hat{\theta}^T * \omega(t) \qquad (2)$$

*Nomenclature*

t  - Index of current sample interval
t*  - Index of one of the sample intervals in the history window (t-NH < t* <= t)
y(t)  - Current measured value of response variable (output) {scalar}
r(t)  - Current measured value of model regressors (inputs) {vector NR*1}
$\hat{y}(t)$  - Current model predicted output {scalar}
$\hat{\theta}(t)$  - Current model parameters {vector NTH*1}
NTH  - number of model parameters ($\hat{b}_0$, $\hat{b}_{11}$, ... $\hat{b}_{NR3}$)
NR  - number of model regressors ($r_1$, $r_2$, ... $r_{NR}$)
NH  - number of samples in the data memory (also referred to as n)
$\theta_0$  - initial model parameter values {vector NTH*1}
$P_0$  - initial model parameter confidence {matrix NTH*NTH}
$\lambda$  - RLS forget factor (0<$\lambda$<=1), default value 1
*order*  - model structure identifier; {Binary vector 1*3NR}
     1 indicates term included, 0 indicates term not included.
     For example, with reference to equation (1) above,
     if NR = 4 and *order* =[111 1001 1011] then

$$\hat{y}(t) = \hat{b}_0(t)$$
$$+ \hat{b}_{11}(t)r_1(t) + \hat{b}_{21}(t)r_2(t) + \hat{b}_{31}(t)r_3(t) + \hat{b}_{41}(t)r_4(t)$$
$$+ \hat{b}_{12}(t)r_1^2(t) + \hat{b}_{42}(t)r_4^2(t)$$
$$+ \hat{b}_{13}(t)r_1^3(t) + \hat{b}_{33}(t)r_3^3(t) + \hat{b}_{43}(t)r_4^3(t)$$

*Algorithm*

**Step 1)** RLS initialisation :

   1.1) Set t*=t-NH
   1.2) Set $\hat{\theta}(t^*)=\theta_0$
   1.3) Set P(t*)=$P_0$

**Step 2)** Update data memory by adding most recent measurements r(t), y(t) and discarding oldest measurements y(t-NH), r(t-NH)

| | y(t-NH+1) | r(t-NH+1) |
|---|---|---|
| | : | : |
| data moves up one row in the delay register at each sample update | y(t-2) | r(t-2) |
| | y(t-1) | r(t-1) |
| | y(t) | r(t) |

**Step 3)** RLS recursion :

3.1) Update recursion time index :

$$t* = t*+1$$

3.2) Compute adaptation gain

$$\mu(t*) = \frac{P(t*-1)\widetilde{\omega}\ (t*)}{\lambda + \widetilde{\omega}^T (t*)P(t*-1)\widetilde{\omega}\ (t*)}$$

where $\widetilde{\omega}\ (t*)$ represents the <u>reduced</u> terms vector $\omega(t)$, defined in equation (2) above. In the reduced terms vector, the elements for which the corresponding element in the binary vector *order* are equal to 0 have been removed. $\mu(t*)$ is an {NTH*1} vector

3.3) Compute model error

$$\varepsilon\ (t*) = y\ (t*) - \widetilde{\omega}^T (t*)\hat{\theta}(t*-1)$$

3.4) Update model parameters

$$\hat{\theta}(t*) = \hat{\theta}(t*-1) + \mu(t*)\varepsilon(t*)$$

3.5) Update the error covariance matrix

$$P(t*) = \frac{1}{\lambda}\left[P(t*-1) - \frac{P(t*-1)\widetilde{\omega}\ (t*)\widetilde{\omega}^T (t*)P(t*-1)}{\lambda + \widetilde{\omega}^T (t*)P(t*-1)\widetilde{\omega}\ (t)}\right]$$

3.6) IF (t* < t) Return to Step 3.1
ELSE go to Step 4.

**Step 4)** Update and output model prediction

$$\hat{y}(t) = \hat{\theta}^T (t)\widetilde{\omega}\ (t)$$

**Step 5)** Wait for next sample interval before returning to Step 1.

**Claims**

1. A method for controlling a gas turbine engine (16) comprising:

   • providing at least one synthetic sensor signal (14) at every sample interval by means of an adaptive sensor model (12) on the basis of on-line measurements (15) and off-line measurements of the behavior of the gas turbine engine (16);
   • sending control signals to the gas turbine engine (16) at sample intervals by selecting either the synthetic sensor signal (14) of the adaptive sensor model (12) or the on-line measurements (15) of the behavior of the gas turbine engine (16); the method being **characterized in that** the step of providing at least one synthetic sensor signal (14) comprises:

      • initializing the adaptive sensor model (12) by using stored off-line measurements of the behavior of the gas turbine engine (16);
      • updating a window of n previous set of measurements by adding the most recent set of measurements and discarding oldest measurements; wherein each set of measurements comprises samples of synthetic sensor signals (14) and of on-line measurements (15) of the behavior of the gas turbine engine (16);
      • adapting the adaptive sensor model (12) by using the updated window;
      • using the adapted adaptive sensor model (12) to predict the synthetic sensor signals (14).

2. A method according to claim 1, wherein adapting the adaptive sensor model (12) by using the updated window comprises using the *n* sets of measurements in chronological order.

3. A method according to any one of claims 1 to 2, wherein adapting the adaptive sensor model (12) by using the updated window comprises, for each of the *n* sets of measurements:

   ➤ applying the adaptive sensor model (12) to the on-line measurements (15) of the behavior of the gas turbine engine (16) sampled at time $t_i$ to generate a predicted output $\hat{y}(t_i)$;

   ➤ calculating an error ($\varepsilon(t_i)$) by finding the difference between the predicted output $\hat{y}(t_i)$ and the synthetic sensor signals (14) sampled at time $t_i$; and

   ➤ using the calculated error ($\varepsilon(t_i)$) to revise a set of parameters ($b_k$) of the adaptive sensor model (12).

4. A method according to claim 3, wherein using the calculated error ($\varepsilon(t_i)$) to revise a set of parameters ($b_k$) of the adaptive sensor model (12) comprises using a recursive estimation algorithm to revise the parameters ($b_k$) of the adaptive sensor model (12).

5. A method according to claim 4, wherein using the calculated error ($\varepsilon(t_i)$) to revise a set of parameters ($b_k$) of the adaptive sensor model (12) comprises using a recursive least squares algorithm to revise the parameters ($b_k$) of the adaptive sensor model (12).

6. A method according to claim 4, wherein using the calculated error ($\varepsilon(t_i)$) to revise a set of parameters ($b_k$) of the adaptive sensor model (12) comprises using an error covariance matrix ($P$) to revise the parameters ($b_k$) of the adaptive sensor model (12); and wherein the method further comprises a step of using the on-line measurements (15) of the behavior of the gas turbine engine (16) sampled at time $t_i$ to revise the error covariance matrix ($P$).

7. A method according to claim 6, wherein revising the error covariance matrix ($P$) comprises using the measurements (15) of the behavior of the gas turbine engine (16) sampled at time $t_i$ according to the following formula:

$$P(t_i) = \frac{1}{\lambda}\left[ P(t_{i-1}) - \frac{P(t_{i-1})\tilde{\omega}(t_i)\tilde{\omega}^T(t_i)P(t_{i-1})}{\lambda + \tilde{\omega}^T(t_i)P(t_{i-1})\tilde{\omega}(t_i)} \right]$$

where:

   $P(t_i)$ is the revised error covariance matrix based on the measurements (15) of the behavior of the gas turbine engine (16) sampled at time $t_i$

$P(t_{i-1})$ is the previous error covariance matrix based on the measurements (15) of the behavior of the gas turbine engine (16) sampled up to time $t_{i-1}$;

$\tilde{\omega}(t_i)$ is a vector representing the set of measurements (15) of the behavior of the gas turbine engine (16) sampled at time $t_i$ and powers of those measurements (15) that are used in the model; and

$\lambda$ is a scalar "forget factor" in the range $0 < \lambda \leq 1$.

**8.** A method according to claim 7, wherein:

in the step of calculating an error ($\varepsilon(t_i)$) the error $\varepsilon(t_i)$ is calculated in accordance with the following formula:

$$\varepsilon(t_i) = y(t_i) - \hat{\theta}^T(t_{i-1})\tilde{\omega}(t_i)$$

where $\hat{\theta}$ is a vector representing the set of model parameters $b_k$;

and in the step of using the calculated error ($\varepsilon(t_i)$) to revise a set of parameters ($b_k$) of the adaptive sensor model (12) the parameters of the adaptive sensor model (12) are revised in accordance with the following formula:

$$\hat{\theta}(t_i) = \hat{\theta}(t_{i-1}) + \mu(t_i)\,\varepsilon(t_i)$$

where $\mu$ is a vector calculated from the following formula:

$$\mu(t_i) = \frac{P(t_{i-1})\tilde{\omega}(t_i)}{\lambda + \tilde{\omega}^T(t_i)P(t_{i-1})\tilde{\omega}(t_i)} \quad .$$

**9.** A gas turbine plant comprising:

a gas turbine engine (16);
various sensors installed in the gas turbine engine (16) to enable on-line measurements of the behavior of the gas turbine engine (16); and
a control apparatus (10) for controlling the gas turbine engine (16); the apparatus including:

➢ a control function (11) configured to send control signals to the gas turbine engine (16) at sample intervals;

➢ at least one adaptive sensor model (12) configured to provide a synthetic sensor signal (14) at every sample interval on the basis of on-line measurements (15) and off-line measurements of the behavior of the gas turbine engine (16);

➢ a selection logic (13), configured to select for input to the control function (11) either the synthetic sensor signal (14) of the adaptive sensor model (12) or the on-line measurements (15) of the behavior of the gas turbine engine (16);

the gas turbine plant being **characterized in that** the adaptive sensor model (12), at every sample interval, is configured to:

• initialize the adaptive sensor model (12) by using stored off-line measurements of the behavior of the gas turbine engine (16);
• update a window of n previous set of measurements by adding the most recent set of measurements and discarding oldest measurements; wherein each set of measurements comprises samples of synthetic sensor signals (14) and of on-line measurements (15) of the behavior of the gas turbine engine (16);
• adapt the adaptive sensor model (12) by using the updated window;
• use the adapted adaptive sensor model (12) to predict the synthetic sensor signals (14).

**Patentansprüche**

1. Verfahren zum Steuern eines Gasturbinenmotors (16), enthaltend:

   • Bereitstellen mindestens eines synthetischen Sensorsignals (14) in jedem Abtastintervall mittels eines adaptiven Sensormodells (12) auf der Basis von online-Messungen (15) und offline-Messungen des Verhaltens des Gasturbinenmotors (16);
   • Senden von Steuersignalen an den Gasturbinenmotor (16) in Abtastintervallen durch Auswählen entweder des synthetischen Sensorsignals (14) des adaptiven Sensormodells (12) oder der online-Messungen (15) des Verhaltens des Gasturbinenmotors (16);

   wobei das Verfahren **dadurch gekennzeichnet ist, dass** der Schritt des Bereitstellens mindestens eines synthetischen Sensorsignals (14) enthält:

   • Initialisieren des adaptiven Sensormodells (12) unter Verwendung von gespeicherten offline-Messungen des Verhaltens des Gasturbinenmotors (16);
   • Aktualisieren eines Fensters von n vorhergehenden Gruppen von Messungen durch Hinzufügen der jüngsten Gruppe von Messungen und Verwerfen der ältesten Messungen; wobei jede Gruppe von Messungen Abtastungen von synthetischen Sensorsignalen (14) und von online-Messungen (15) des Verhaltens des Gasturbinenmotors (16) enthält;
   • Adaptieren des adaptiven Sensormodells (12) unter Verwendung des aktualisierten Fensters;
   • Verwenden des adaptierten adaptiven Sensormodells (12) zur Vorhersage der synthetischen Sensorsignale (14).

2. Verfahren nach Anspruch 1, wobei das Adaptieren des adaptiven Sensormodells (12) unter Verwendung des aktualisierten Fensters die Verwendung von n Gruppen von Messungen in chronologischer Reihenfolge umfasst.

3. Verfahren nach einem der Ansprüche 1 bis 2, wobei das Adaptieren des adaptiven Sensormodells (12) unter Verwendung des aktualisierten Fensters für jede der n Gruppen von Messungen umfasst:

   ➢ Anwenden des adaptiven Sensormodells (12) an den online-Messungen (15) des Verhaltens des Gasturbinenmotors (16), die zu der Zeit $t_i$ abgetastet wurden, um einen vorhergesagten Ausgang $\hat{y}(t_i)$ zu erzeugen;

   ➢ Berechnen eines Fehlers ($\varepsilon(t_i)$) durch Ermittlung der Differenz zwischen dem vorhergesagten Ausgang $\hat{y}(t_i)$ und den zu der Zeit $t_i$ abgetasteten synthetischen Sensorsignalen (14); und

   ➢ Verwenden des berechneten Fehlers ($\varepsilon(t_i)$), um eine Gruppe von Parametern ($b_k$) des adaptiven Sensormodells (12) zu revidieren.

4. Verfahren nach Anspruch 3, wobei das Verwenden des berechneten Fehlers ($\varepsilon(t_i)$) zum Revidieren einer Gruppe von Parametern ($b_k$) des adaptiven Sensormodells (12) die Verwendung eines rekursiven Schätzungsalgorithmus zum Revidieren der Parameter ($b_k$) des adaptiven Sensormodells (12) umfasst.

5. Verfahren nach Anspruch 4, wobei das Verwenden des berechneten Fehlers ($\varepsilon(t_i)$) zum Revidieren einer Gruppe von Parametern ($b_k$) des adaptiven Sensormodells (12) die Verwendung eines rekursiven Algorithmus der kleinsten Quadrate zum Revidieren der Parameter ($b_k$) des adaptiven Sensormodells (12) umfasst.

6. Verfahren nach Anspruch 4, wobei das Verwenden des berechneten Fehlers ($\varepsilon(t_i)$) zum Revidieren einer Gruppe von Parametern ($b_k$) des adaptiven Sensormodells (12) die Verwendung einer Fehlerkovarianzmatrix (P) zum Revidieren der Parameter ($b_k$) des adaptiven Sensormodells (12) umfasst; und wobei das Verfahren ferner einen Schritt der Verwendung der online-Messungen (15) des Verhaltens des Gasturbinenmotors (16), die zu der Zeit $t_i$ abgetastet wurden, zum Revidieren der Fehlerkovarianzmatrix (P) umfasst.

7. Verfahren nach Anspruch 6, wobei das Revidieren der Fehlerkovarianzmatrix (P) die Verwendung der Messungen (15) des Verhaltens des Gasturbinenmotors (16), die zu der Zeit $t_i$ abgetastet wurden, gemäß der folgenden Formel umfasst:

$$P(t_i) = \frac{1}{\lambda}\left[ P(t_{i-1}) - \frac{P(t_{i-1})\tilde{\omega}(t_i)\tilde{\omega}^T(t_i)P(t_{i-1})}{\lambda + \tilde{\omega}^T(t_i)P(t_{i-1})\tilde{\omega}(t_i)} \right]$$

worin:

$P(t_i)$ die revidierte Fehlerkovarianzmatrix (P) auf der Grundlage von Messungen (15) des Verhaltens des Gasturbinenmotors (16) ist, die zu der Zeit $t_i$ abgetastet wurden;

$P(t_{i-1})$ die vorhergehende Fehlerkovarianzmatrix (P) auf der Grundlage von Messungen (15) des Verhaltens des Gasturbinenmotors (16) ist, die zu der Zeit $t_{i-1}$ abgetastet wurden;

$\tilde{\omega}(ti)$ ein Vektor ist, der eine Gruppe von Messungen (15) des Verhaltens des Gasturbinenmotors (16) darstellt, die zu der Zeit $t_i$ abgetastet wurden, sowie Potenzen dieser Messungen (15), die in dem Modell verwendet werden; und

$\lambda$ ein skalarer "Vergessens-Faktor" im Bereich von $0 < \lambda \leq 1$ ist.

8. Verfahren nach Anspruch 7, wobei:

in dem Schritt des Berechnens eines Fehlers ($\varepsilon(t_i)$) der Fehler ($\varepsilon(t_i)$) gemäß der folgenden Formel berechnet wird:

$$\varepsilon(t_i) = y(t_i) - \hat{\theta}^T(t_{i-1})\tilde{\omega}(t_i)$$

worin $\hat{\theta}$ ein Vektor ist, der die Gruppe von Modellparametern ($b_k$) darstellt;

und in dem Schritt der Verwendung des berechneten Fehlers ($\varepsilon(t_i)$) zum Revidieren einer Gruppe von Parametern ($b_k$) des adaptiven Sensormodells (12) die Parameter des adaptiven Sensormodells gemäß der folgenden Formel revidiert werden:

$$\hat{\theta}(t_i) = \hat{\theta}(t_{i-1}) + \mu(t_i)\varepsilon(t_i)$$

worin $\mu$ ein Vektor ist, der aus der folgenden Formel berechnet wird:

$$\mu(t_i) = \frac{P(t_{i-1})\tilde{\omega}(t_i)}{\lambda + \tilde{\omega}^T(t_i)P(t_{i-1})\tilde{\omega}(t_i)} \ .$$

9. Gasturbinenanlage, enthaltend:

einen Gasturbinenmotor (16);

verschiedene in dem Gasturbinenmotor (16) eingebaute Sensoren, um online-Messungen des Verhaltens des Gasturbinenmotors (16) zu ermöglichen; und

eine Steuereinrichtung (10) zum Steuern des Gasturbinenmotors (16); welche Einrichtung enthält:

➢ eine Steuerfunktion (11), die dafür konfiguriert ist, Steuersignale in Abtastintervallen an den Gasturbinenmotor (16) zu senden;

➢ mindestens ein adaptives Sensormodell (12), das dafür konfiguriert ist, ein synthetisches Sensorsignal (14) in jedem Abtastintervall auf der Basis der online-Messungen (15) und offline-Messungen des Verhaltens des Gasturbinenmotors (16) bereitzustellen;

➢ eine Auswahllogik (13), die dafür konfiguriert ist, zur Eingabe in die Steuerfunktion (11) entweder das synthetische Sensorsignal (14) des adaptiven Sensormodells (12) oder die online-Messungen (15) des Verhaltens des Gasturbinenmotors (16) einzugeben;

wobei die Gasturbinenanlage **dadurch gekennzeichnet ist, dass** das adaptive Sensormodell (12) in jedem Abtastintervall dafür konfiguriert ist

• das adaptive Sensormodell (12) unter Verwendung von gespeicherten offline-Messungen des Verhaltens des Gasturbinenmotors (16) zu initialisieren;

• ein Fenster von n vorhergehenden Gruppen von Messungen durch Hinzufügen der jüngsten Gruppe von Messungen und Verwerfen der ältesten Messungen zu aktualisieren; wobei jede Gruppe von Messungen Abtastungen von synthetischen Sensorsignalen (14) und von online-Messungen (15) des Verhaltens des Gasturbinenmotors (16) enthält;

• das adaptive Sensormodell (12) unter Verwendung des aktualisierten Fensters zu adaptieren;

• das adaptierte adaptive Sensormodell (12) zu verwenden, um die synthetischen Sensorsignale (14) vorherzusagen.

**Revendications**

1. Procédé pour commander un moteur à turbine à gaz (16) comprenant :

   • la fourniture d'au moins un signal de capteur synthétique (14) à chaque intervalle d'échantillonnage au moyen d'un modèle de capteur adaptatif (12) sur la base de mesures en ligne (15) et de mesures hors-ligne du comportement du moteur à turbine à gaz (16) ;

   • l'envoi de signaux de commande au moteur à turbine à gaz (16) à des intervalles d'échantillonnage en sélectionnant soit le signal de capteur synthétique (14) du modèle de capteur adaptatif (12), soit les mesures en ligne (15) du comportement du moteur à turbine à gaz (16) ;

   le procédé étant **caractérisé en ce que** l'étape de fourniture d'au moins un signal de capteur synthétique (14) comprend :

   • l'initialisation du modèle de capteur adaptatif (12) en utilisant les mesures hors-ligne mémorisées du comportement du moteur à turbine à gaz (16) ;

   • la mise à jour d'une fenêtre de n ensembles de mesures précédents en ajoutant l'ensemble de mesures le plus récent et en écartant les mesures les plus anciennes ; dans lequel chaque ensemble de mesures comprend des échantillons de signaux de capteur synthétiques (14) et de mesures en ligne (15) du comportement du moteur à turbine à gaz (16) ;

   • l'adaptation du modèle de capteur adaptatif (12) en utilisant la fenêtre mise à jour

   • l'utilisation du modèle de capteur adaptatif (12) adapté pour prédire les signaux de capteur synthétiques (14).

2. Procédé selon la revendication 1, dans lequel l'adaptation du modèle de capteur adaptatif (12) en utilisant la fenêtre mise à jour comprend l'utilisation des n ensembles de mesures dans l'ordre chronologique.

3. Procédé selon l'une quelconque des revendications 1 et 2, dans lequel l'adaptation du modèle de capteur adaptatif (12) en utilisant la fenêtre mise à jour comprend, pour chacun des n ensembles de mesures :

   - l'application du modèle de capteur adaptatif (12) aux mesures en ligne (15) du comportement du moteur à turbine à gaz (16) échantillonné à un instant $t_i$ pour générer une sortie prédite $\hat{y}(t_i)$ ;

   - le calcul d'une erreur $(\varepsilon(t_i))$ en trouvant la différence entre la sortie prédite $\hat{y}(t_i)$ et les signaux de capteur synthétiques (14) échantillonnés à un instant $t_i$ ; et

   - l'utilisation de l'erreur $(\varepsilon(t_i))$ calculée pour modifier un ensemble de paramètres $(b_k)$ du modèle de capteur adaptatif (12).

4. Procédé selon la revendication 3, dans lequel l'utilisation de l'erreur $(\varepsilon\text{-}(t_i))$ calculée pour modifier un ensemble de paramètres $(b_k)$ du modèle de capteur adaptatif (12) comprend l'utilisation d'un algorithme d'estimation récursif pour modifier les paramètres $(b_k)$ du modèle de capteur adaptatif (12).

5. Procédé selon la revendication 4, dans lequel l'utilisation de l'erreur $(\varepsilon(t_i))$ calculée pour modifier un ensemble de paramètres $(b_k)$ du modèle de capteur adaptatif (12) comprend l'utilisation d'un algorithme des moindres carrés récursif pour modifier les paramètres $(b_k)$ du modèle de capteur adaptatif (12).

6. Procédé selon la revendication 4, dans lequel l'utilisation de l'erreur $(\varepsilon(t_i))$ calculée pour modifier un ensemble de paramètres $(b_k)$ du modèle de capteur adaptatif (12) comprend l'utilisation d'une matrice de covariance d'erreur (P) pour modifier les paramètres $(b_k)$ du modèle de capteur adaptatif (12) ; et dans lequel le procédé comprend en outre une étape d'utilisation des mesures en ligne (15) du comportement du moteur à turbine à gaz (16) échantillonné à un instant $t_i$ pour modifier la matrice de covariance d'erreur (P).

**7.** Procédé selon la revendication 6, dans lequel la modification de la matrice de covariance d'erreur (P) comprend l'utilisation des mesures (15) du comportement du moteur à turbine à gaz (16) échantillonné à un instant $t_i$ conformément à la formule suivante :

$$P(t_i) = \frac{1}{\lambda}\left[P(t_{i-1}) - \frac{P(t_{i-1})\tilde{\omega}(t_i)\tilde{\omega}^T(t_i)P(t_{i-1})}{\lambda + \tilde{\omega}^T(t_i)P(t_{i-1})\tilde{\omega}(t_i)}\right]$$

où :

$P(t_i)$ est la matrice de covariance d'erreur modifiée basée sur les mesures (15) du comportement du moteur à turbine à gaz (16) échantillonné à un instant $t_i$ ;
$P(t_{i-1})$ est la matrice de covariance d'erreur précédente basée sur les mesures (15) du comportement du moteur à turbine à gaz (16) échantillonné jusqu'à un instant $t_{i-1}$ ;
$\tilde{\omega}(t_i)$ est un vecteur représentant l'ensemble de mesures (15) du comportement du moteur à turbine à gaz (16) échantillonné à un instant $t_i$ et les puissances de ces mesures (15) qui sont utilisées dans le modèle ; et
$\lambda$ est un « facteur d'oubli » scalaire dans la plage $0 < \lambda \leq 1$.

**8.** Procédé selon la revendication 7, dans lequel :

à l'étape de calcul d'une erreur ($\varepsilon(t_i)$), l'erreur ($\varepsilon(t_i)$) est calculée conformément à la formule suivante :

$$\varepsilon(t_i) = y(t_i) - \hat{\theta}^T(t_{i-1})\tilde{\omega}(t_i)$$

où $\hat{\theta}$ est un vecteur représentant l'ensemble de paramètres de modèle $b_k$ ;
et à l'étape d'utilisation de l'erreur ($\varepsilon(t_i)$) calculée pour modifier un ensemble de paramètres ($b_k$) du modèle de capteur adaptatif (12), les paramètres du modèle de capteur adaptatif (12) sont modifiés conformément à la formule suivante :

$$\hat{\theta}(t_i) = \hat{\theta}(t_{i-1}) + \mu(t_i)\varepsilon(t_i)$$

où $\mu$ est un vecteur calculé à partir de la formule suivante :

$$\mu(t_i) = \frac{P(t_{i-1})\tilde{\omega}(t_i)}{\lambda + \tilde{\omega}^T(t_i)P(t_{i-1})\tilde{\omega}(t_i)} .$$

**9.** Installation de turbine à gaz comprenant :

un moteur à turbine à gaz (16) ;
divers capteurs installés dans le moteur à turbine à gaz (16) pour permettre des mesures en ligne du comportement du moteur à turbine à gaz (16) ; et
un appareil de commande (10) pour commander le moteur à turbine à gaz (16) ; l'appareil comprenant :

- une fonction de commande (11) configurée pour envoyer des signaux de commande au moteur à turbine à gaz (16) à des intervalles d'échantillonnage ;
- au moins un modèle de capteur adaptatif (12) configuré pour fournir un signal de capteur synthétique (14) à chaque intervalle d'échantillonnage sur la base de mesures en ligne (15) et de mesures hors-ligne du comportement du moteur à turbine à gaz (16) ;

- une logique de sélection (13), configurée pour sélectionner en tant qu'entrée pour la fonction de commande (11) soit le signal de capteur synthétique (14) du modèle de capteur adaptatif (12), soit les mesures en ligne (15) du comportement du moteur à turbine à gaz (16) ;

l'installation de turbine à gaz étant **caractérisée en ce que** le modèle de capteur adaptatif (12), à chaque intervalle d'échantillonnage, est configuré pour :

• initialiser le modèle de capteur adaptatif (12) en utilisant les mesures hors-ligne mémorisées du comportement du moteur à turbine à gaz (16) ;
• mettre à jour une fenêtre de n ensembles de mesures précédents en ajoutant l'ensemble de mesures le plus récent et en écartant les mesures les plus anciennes ; dans laquelle chaque ensemble de mesures comprend des échantillons de signaux de capteur synthétiques (14) et de mesures en ligne (15) du comportement du moteur à turbine à gaz (16) ;
• adapter le modèle de capteur adaptatif (12) en utilisant la fenêtre mise à jour ;
• utiliser le modèle de capteur adaptatif (12) adapté pour prédire les signaux de capteur synthétiques (14).

10

13
Selection Logic

11
Control

16
Gas Turbine
Engine

Outputs
(Sensor Signals)
15

12
Adaptive
Sensor Model

14

# Fig. 1

**1)** Initialize model to off-line parameters

**2)** Update history window of *n* samples of past input and output data

**3)** Run adaptive recursive least squares algorithm through the data in the history window (old to new) allowing the parameters to be modified from their off-line values

**4)** Use the final model to predict the output

**5)** Pause until the next control system sample period

# Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5584172 A
- US 4639853 A